# EUROPÄISCHE PATENTSCHRIFT

(11) **EP 3 386 840 B1**
(45) Veröffentlichungstag und Bekanntmachung des Hinweises auf die Patenterteilung: **20.05.2020**
(21) Anmeldenummer: 16798504.3
(22) Anmeldetag: 21.11.2016
(51) Int. Cl.: B62D 21/11, B62D 21/15

(54) **HINTERACHSHILFSRAHMEN SOWIE KRAFTFAHRZEUG MIT EINEM DERARTIGEN HINTERACHSHILFSRAHMEN**
REAR AXLE SUBFRAME AND MOTOR VEHICLE HAVING SUCH A REAR AXLE SUBFRAME
FAUX-CHÂSSIS D'ESSIEU ARRIÈRE ET VÉHICULE AUTOMOBILE ÉQUIPÉ D'UN TEL FAUX-CHÂSSIS D'ESSIEU ARRIÈRE

(30) Priorität: 10.12.2015 DE 102015224894
(43) Veröffentlichungstag der Anmeldung: 17.10.2018
(73) Patentinhaber: Volkswagen Aktiengesellschaft, 38440 Wolfsburg (DE)
(72) Erfinder: BEHN, Michael, 38551 Ribbesbüttel (DE); PRENZEL, Rainer, 39112 Madeburg (DE)
(86) Internationale Anmeldenummer: PCT/EP2016/078305
(87) Internationale Veröffentlichungsnummer: WO 2017/097572

(56) Entgegenhaltungen:
- EP-A2- 1 312 536
- DE-A1-102011 111 708
- DE-B3-102011 050 657
- JP-A- H0 885 473
- US-A1- 2003 075 951

## Beschreibung

Die Erfindung betrifft einen Hinterachshilfsrahmen gemäß der Merkmalskombination des Patentanspruchs 1 der Erfindung. Gemäß Anspruch 9 der Erfindung betrifft dieselbe ferner ein Kraftfahrzeug mit einem derartigen Hinterachshilfsrahmen.

Ein solcher Hinterachshilfsrahmen ist beispielsweise aus der EP 1 312 536 A2 bekannt.

Ähnliche Ausführungsformen von Hinterachshilfsrahmen sind aus der US 2003/0075951 A1 und JP H08 85473 A bekannt.

Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Aus der DE 41 29 538 A1 ist ein Hilfsrahmen für ein Kraftfahrzeug, hier als Fahrschemel bezeichnet, bekannt, welcher zwei baugleiche, in Fahrzeuglängsrichtung verlaufende Seitenteile aufweist, die über Querträger miteinander verbunden sind. Die Seitenteile bilden mit den Querträgern eine starre Montageeinheit aus und weisen integrierte Lageraufnahmen für die Radaufhängung auf. Die Querträger sind entsprechend dem Fahrzeugtyp ausgeführt, wie z.B. mit hinten liegendem Antriebsaggregat oder mit vorn liegendem Antriebsaggregat und hinten liegendem Differential, wobei die Seitenteile unverändert für jeden dieser Fahrzeugtypen verwendbar sind. Darüber hinaus kann jeder Fahrzeugtyp eine Hinterradlenkung aufweisen, die einen speziellen Querträger bedingt. Die Anbindung der Querträger an die Seitenteile erfolgt in Knotenpunkten der Seitenteile. Im Hinblick auf eine hintere Antriebseinheit ist ein vom Querträger freier Raum in Hochrichtung geschaffen, welcher von einem die Antriebseinheit überspannendes Brückenglied erzielt ist. Aus der DE 60 2005 003 685 T2 ist ein sogenannter modulierbarer Hilfsrahmen für ein Kraftfahrzeug bekannt, welcher Hilfsrahmen im Wesentlichen von drei Teilen gebildet ist, von denen zwei Teile derart konstruiert sind, dass sie für mehrere Typen von Hilfsrahmen verwendbar sind. Das dritte Teil ist dagegen ein spezielles Teil für eine reduzierte Anzahl von Hilfsrahmen, wobei sich die Reduzierung aus der Tatsache ergibt, dass das dritte Teil in zwei unterschiedlichen Stellungen montiert werden kann.

Seit geraumer Zeit ist es des Weiteren bekannt, Kraftfahrzeuge ausschließlich elektrisch anzutreiben oder einen Hybridantrieb, bestehend aus zumindest einer elektrischen Maschine und einem Verbrennungsmotor, vorzusehen, wobei die elektrische Maschine beispielsweise von einem an der Fahrzeugkarosserie oder am Chassis befestigten Hinterachshilfsrahmen getragen wird, an welchen Hinterachshilfsrahmen sich nach Fahrzeug-vorn eine Traktionsbatterie anschließt. Es sind eine Vielzahl von Maßnahmen bekannt, um im Falle eines Crashereignisses die Traktionsbatterie vor Beschädigung zu schützen. Dieser Schutz wird herkömmlich durch eine besonders steife Struktur bewirkt, welches jedoch mit erhöhtem Bauraum und Fahrzeuggewicht einhergeht. Hier setzt die nachfolgend beschriebene Erfindung an.

Gemäß einem ersten Aspekt der Erfindung ist es Aufgabe der Erfindung, einen im Hinblick auf den Stand der Technik verbesserten Hinterachshilfsrahmen zu schaffen, welcher insbesondere die Crashsicherheit für in Fahrtrichtung des Kraftfahrzeugs gesehen, dem Hilfsrahmen nachgeordnete Vorrichtungen und/oder Aggregate erhöht. Gemäß einem zweiten Aspekt der Erfindung soll ein Hinterachshilfsrahmen geschaffen werden, der bei optimaler Kraftübertragung einfach und kostengünstig herstellbar und an unterschiedliche Fahrzeugtypen anpassbar ist. Ferner ist es Aufgabe der Erfindung, ein Kraftfahrzeug mit einem derartigen Hinterachshilfsrahmen bereitzustellen.

Gelöst wird die gestellte Aufgabe durch einen Hinterachshilfsrahmen für ein Kraftfahrzeug, mit zwei in Fahrzeuglängsrichtung (X-Richtung) verlaufenden Seitenteilen sowie mit einem ersten, vorderen und einem zweiten, hinteren, die Seitenteile untereinander verbindenden Querträger, wobei der Hinterachshilfsrahmen einen Freiraum umschließt, in welchem eine am Hinterachshilfsrahmen gelagerte und befestigte Antriebseinheit angeordnet oder anordbar ist, und wobei die Seitenteile, jeweils einen Freigang für die besagte Antriebseinheit sowie eine Sollknickstelle ausbildend, bereichsweise eine Querschnittsverengung und/oder eine lokale Wanddickenreduzierung aufweisen.

Durch diese Maßnahme ist ein Hinterachshilfsrahmen geschaffen, der im Falle eines Crashereignisses, insbesondere eines Heckcrashs vorteilhaft durch Verformung Anstoßenergie absorbiert sowie geeignet ist, die Antriebseinheit bei einem etwaigen Versatz derselben infolge erhöhter Anstoßkraft derart definiert zu führen, dass in Fahrtrichtung des Kraftfahrzeugs gesehen der Antriebseinheit nachgeordnete Vorrichtungen und/oder Aggregate vom Versatz der Antriebseinheit unbeeinflusst bleiben.

Um die Antriebseinheit im besagten Crashfall optimal zu führen, ist/sind erfindungsgemäß in Fahrtrichtung des Kraftfahrzeugs gesehen die Querschnittsverengung und/oder die lokale Wanddickenreduzierung bevorzugt zwischen zumindest einer ersten, vorderen und zumindest einer zweiten, hinteren Lagerstelle der Antriebseinheit am Hinterachshilfsrahmen angeordnet. Weiter bevorzugt ist/sind die Querschnittsverengung und/oder die lokale Wanddickenreduzierung im unteren Bereich des jeweiligen Seitenteils ausgebildet. Hierdurch ist vorteilhaft bei erhöhter Anstoßkraft ein Ausknicken des jeweiligen Seitenteils im Bereich der Querschnittsverengung und/oder der lokalen Wanddickenreduzierung tendenziell nach Fahrzeug-oben und somit von der im Freigang des jeweiligen Seitenteils angeordneten Antriebseinheit weg zu verzeichnen. Die infolge des Crashereignisses unmittelbar auf die Antriebseinheit wirkende Kräfte werden somit vorteilhaft minimiert. Eine optimale Lagerung der Antriebseinheit ergibt sich erfindungsgemäß durch zwei erste, vordere Lagerstellen, wobei je eine an einem Seitenteil angeordnet ist, und zwei zweite, hintere Lagerstellen, die am zweiten, hinteren Querträger angeordnet sind. Darüber hinaus ist durch diese Maßnahme im Falle besagten Crashereignisses eine besonders gute Führung der Antriebseinheit zu verzeichnen. Die ersten, vorderen Lagerstellen fungieren als vordere Abstützung der Antriebseinheit, welche eine Bewegung der Antriebseinheit nach Fahrzeug-vorn wirkungsvoll behindert. In vorteilhafter Weiterbildung der Erfindung ist/sind die erste/n, vordere/n Lagerstelle/n in einer in Fahrzeugquerrichtung (Y-Richtung) verlaufenden Achse angeordnet und derart ausgebildet, dass im Falle des besagten Heckcrashereignisses die Antriebseinheit um die besagte Achse schwenkbar ist, wobei die Achse in diesem Fall sozusagen als Schwenkachse für die Antriebseinheit fungiert. D.h., wirkt im Falle eines Heckcrashereignisses über den hinteren zweiten Querträger eine Kraft auf die Antriebseinheit, erfährt dieselbe infolge Ausknickens der Seitenteile tendentiell nach oben vorteilhaft ein Moment um besagte in Fahrzeugquerrichtung (Y-Richtung) verlaufenden Achse und wird demnach bei Vermeidung eines Versatzes in Fahrtrichtung um besagte Schwenkachse nach oben geschwenkt. In Fahrtrichtung gesehen behält demnach die Antriebseinheit vorteilhaft ihre Position bei und nachgeordnete Vorrichtungen und/oder Aggregate bleiben von der crashbedingten Bewegung der Antriebseinheit unbeeinflusst. Wie die Erfindung noch vorsieht, ist zumindest der zweite, hintere Querträger lösbar mit den Seitenteilen verbunden, so dass bei Bedarf während der Montage aus vorgehaltenen fahrzeugtypbezogen zweiten, hinteren Querträgern für beispielsweise gelenkte oder ungelenkte Hinterräder gewählt werden kann. Der Rest des Hinterachshilfsrahmens ist dabei bevorzugt als Gleichteil für alle Fahrzeugtypen ausgebildet. Um die Kraftübertragung im Hinterachshilfsrahmen zu verbessern, ist bevorzugt vorgesehen, dass der zweite, hintere Querträger durch Verschraubung mit jedem Seitenteil verbunden ist, wobei je Seitenteil zumindest eine Schraubverbindung durch eine Befestigungsschraube bewirkt ist, die in Fahrzeuglängsrichtung (X-Richtung) verläuft. Darüber hinaus sind durch diese Maßnahme Bauraumvorteile zu verzeichnen. Weiter vorteilhaft bestehen die Seitenteile und der erste, vordere Querträger bevorzugt aus einem Metallguss, insbesondere einem Guss aus Aluminium, einer Aluminiumlegierung oder einem Stahl. Der zweite, hintere Querträger kann belastungsangepasst ebenfalls aus besagtem Metallguss oder auch aus einem faserverstärkten, insbesondere einem kohlefaserverstärkten Kunststoff bestehen. Weiter vorteilhaft ist vorgesehen, dass die Seitenteile Anschraubstellen mit Bohrungen zur Befestigung von Achslenkern aufweisen, welche durch Stanzen erzeugt sind. Durch diese Maßnahme ist die Erstellung besagter Bohrungen vereinfacht, da beim Stanzen geringerer Bauraum erforderlich ist als bei Verwendung herkömmlicher Bohrspindeln. Was die Antriebseinheit anbelangt, handelt es sich bei derselben bevorzugt um eine elektrische Maschine.

Die Erfindung betrifft auch ein Kraftfahrzeug, mit einem Hinterachshilfsrahmen der vorbeschriebenen Art.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: äußerst schematisch ein mit dem erfindungsgemäßen Hinterachshilfsrahmen ausgestattetes sowie elektrisch angetriebenes Kraftfahrzeug,
- Fig. 2: eine perspektivische Ansicht des Hinterachshilfsrahmens gemäß einer ersten vorteilhaften Ausführungsform desselben im Zusammenbau mit angeschlossenen Lenkern und einer elektrischen Maschine,
- Fig. 3: eine perspektivische Einzelansicht des Hinterachshilfsrahmens nach Fig. 2,
- Fig. 4: eine perspektivische Ansicht eines hinteren zweiten Querträgers des Hinterachshilfsrahmens nach Fig. 2 bzw. 3,
- Fig. 5: eine perspektivische Ansicht des Hinterachshilfsrahmens gemäß einer zweiten vorteilhaften Ausführungsform desselben im Zusammenbau mit angeschlossenen Lenkern und der elektrischen Maschine,
- Fig. 6: eine perspektivische Einzelansicht des Hinterachshilfsrahmens nach Fig. 5, und
- Fig. 7: eine perspektivische Ansicht eines hinteren zweiten Querträgers des Hinterachshilfsrahmens nach Fig. 5 bzw. 6.

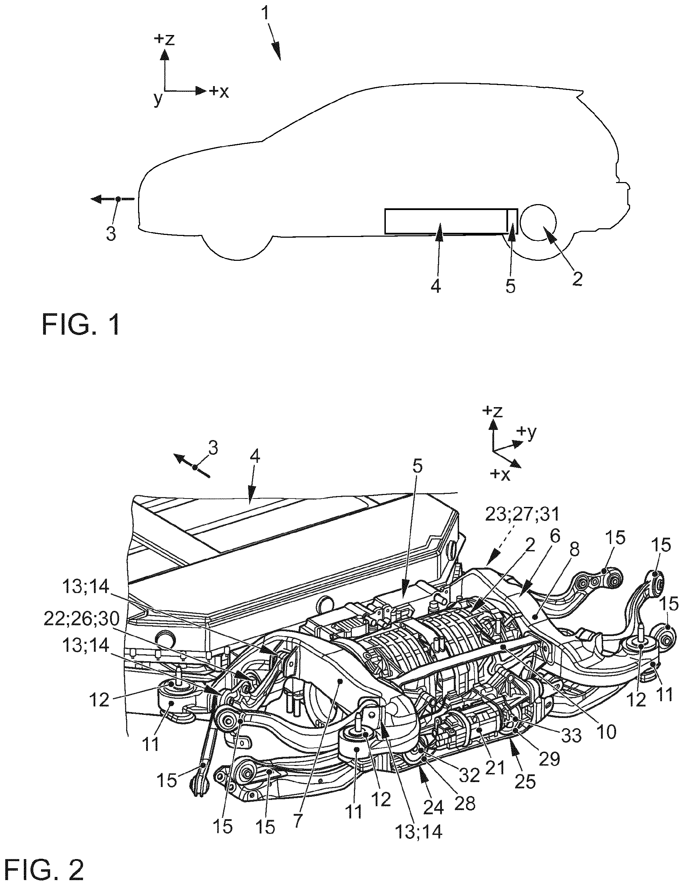

Fig. 1 zeigt ein Kraftfahrzeug 1 mit einer Antriebseinheit 2, welche gemäß diesem Ausführungsbeispiel durch eine elektrische Maschine gebildet ist. Die Antriebseinheit 2 bzw. elektrischen Maschine ist im Bereich der Hinterachse des Kraftfahrzeugs 1 angeordnet. Der Antriebseinheit 2 in Form der elektrischen Maschine ist in Fahrtrichtung 3 des Kraftfahrzeugs 1 gesehen eine Traktionsbatterie 4 nachgeordnet. Zwischen der Antriebseinheit 2 und der Traktionsbatterie 4 ist ferner eine Leistungselektronik 5 für die Antriebseinheit 2 respektive die elektrische Maschine angeordnet.

Die Antriebseinheit 2 in Form der elektrischen Maschine ist gemäß Fig. 2 an einem Hinterachshilfsrahmen 6 gelagert und befestigt. Der Hinterachshilfsrahmen 6 ist durch zwei in Fahrzeuglängsrichtung (X-Richtung) verlaufende Seitenteile 7, 8 gebildet, die mittels eines ersten, vorderen und eines zweiten, hinteren Querträgers 9, 10 untereinander verbunden sind. Der Hinterachshilfsrahmen 6 weist an den Enden der Seitenteile 7, 8 hohlzylindrische Anbindungsbutzen 11 zur Abstützung und Befestigung des Hinterachshilfsrahmens 6 an der hier nicht zeichnerisch dargestellten Fahrzeugkarosserie auf. In den Anbindungsbutzen 11 sind zur akustischen Entkopplung des Hinterachshilfsrahmens 6 von der Fahrzeugkarosserie an sich bekannte Elastomerlager 12 respektive Gummi-Metall-Lager angeordnet.

Des Weiteren weisen die Seitenteile 7, 8 diverse Anschraubstellen 13 mit Bohrungen 14 zur Befestigung von Achslenkern 15 auf (Fig. 2 bis 4). Die besagten Bohrungen 14 sind bevorzugt durch Stanzen erzeugt, wodurch die Erstellung besagter Bohrungen 14 vereinfacht ist, da beim Stanzen geringerer Bauraum erforderlich ist als bei Verwendung herkömmlicher Bohrspindeln.

Gemäß diesem Ausführungsbeispiel sind die Seitenteile 7, 8 samt dem ersten, vorderen Querträger 9 einteilig aus einem Metallguss gebildet, bevorzugt einem Guss aus einem Aluminium, einer Aluminiumlegierung oder einem Stahl. Der zweite, hintere Querträger 10 ist demgegenüber als Montageteil ausgebildet und durch Verschraubung mit jedem Seitenteil 7, 8 verbunden bzw. verbindbar. Er kann ebenfalls aus einem Metallguss, bevorzugt einem Guss aus einem Aluminium, einer Aluminiumlegierung oder einem Stahl, oder aus einem faserverstärkten Kunststoff, wie einem kohle- oder glasfaserverstärkten Kunststoff bestehen.

Der zweite, hintere Querträger 10 weist gemäß diesem Ausführungsbeispiel neben Lenkeranschraubstellen 16 beidenends je drei Anschraubstellen 17 bis 19 zur Befestigung des zweiten, hinteren Querträgers 10 an den Seitenteilen 7, 8 auf. Zumindest eine der Anschraubstellen 17 bis 19, vorliegend die Anschraubstelle 19, ist derart ausgebildet, dass die zugeordnete, hier nicht zeichnerisch dargestellte Befestigungsschraube in Fahrzeuglängsrichtung (X-Richtung) verläuft. Wie bereits oben dargetan, ist durch diese Maßnahme vorteilhaft die Kraftübertragung im Hinterachshilfsrahmen 6 verbessert. Bei dem in den Fig. 2 bis 4 gezeigten zweiten, hinteren Querträger 10 handelt es sich um einen Querträger 10, der für eine gelenkte Hinterachse ausgeführt ist. Insoweit weist derselbe vorliegend drei Anbindungs- respektive Anschraubstellen 20 für eine in Fig. 2 gezeigte Lenkeinrichtung 21 auf.

Der Hinterachshilfsrahmen 6 weist des Weiteren an jedem Seitenteil 7, 8 in Fahrtrichtung 3 gesehen eine erste, vordere Lagerstelle 22, 23 und am zweiten, hinteren Querträger 10 zwei zweite, hintere Lagerstellen 24, 25 für die Antriebseinheit 2 in Form der elektrischen Maschine auf. Die Lagerstellen 22 bis 25 sind durch hohlzylindrische Anbindungsbutzen 26 bis 29 mit zugeordneten Elastomerlagern 30 bis 33 (Fig. 2) zur akustischen Entkopplung der Antriebseinheit 2 vom Hinterachshilfsrahmen 6 und der Fahrzeugkarosserie gebildet.

Die beiden ersten, vorderen Lagerstellen 22, 23 respektive deren hohlzylindrische Anbindungsbutzen 26, 27 samt Elastomerlager 30, 31 sind innerhalb einer in Fahrzeugquerrichtung (Y-Richtung) verlaufenden Achse 34, d.h., koaxial zueinander angeordnet. Demgegenüber sind die Mittenachsen der beiden zweiten, hinteren Lagerstellen 24, 25 respektive deren hohlzylindrischer Anbindungsbutzen 28, 29 samt Elastomerlager 32, 33 in Fahrzeuglängsrichtung (X-Richtung) und parallel zueinander angeordnet ausgerichtet.

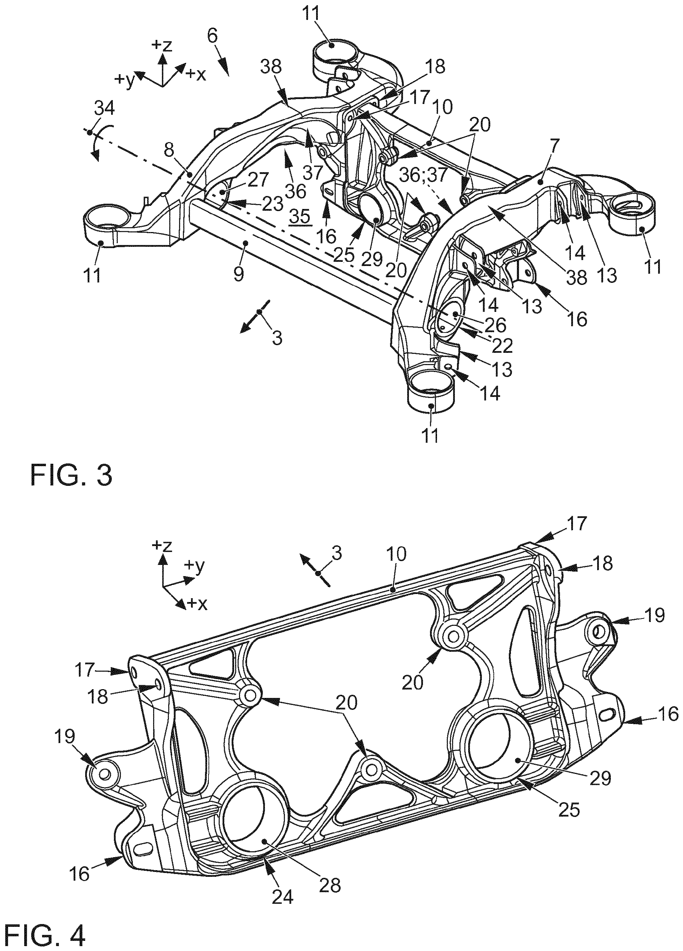

Wie den Fig. 2 bis 4 weiter zu entnehmen ist, umschließt der als geschlossener Rahmen ausgebildete Hinterachshilfsrahmen 6 einen Freiraum 35, in welchem die Antriebseinheit 2, vorliegend die elektrische Maschine angeordnet ist. Die Antriebseinheit 2 bzw. elektrische Maschine erstreckt sich in Fahrzeugquerrichtung (Y-Richtung) gesehen von einem Seitenteil 7 zum anderen Seitenteil 8. Die Seitenteile 7, 8 weisen in einem Bereich zwischen den ersten, vorderen und zweiten, hinteren Lagerstellen 22, 23; 24, 25 der Antriebseinheit 2 am Hinterachshilfsrahmen 6 freiraumseitig je eine Querschnittsverengung 36 derart auf, dass ein Freigang 37 in Form einer Einbuchtung gebildet ist, welcher Freigang 37 zumindest teilweise von der Antriebseinheit 2 eingenommen ist. Bevorzugt ist besagte Querschnittsverengung 36 in einem unteren Bereich des jeweiligen Seitenteils 7, 8 ausgebildet (Fig. 3). Durch besagte Querschnittsverengung 36 ist vorteilhaft eine Sollknickstelle 38 im jeweiligen Seitenteil 7, 8 ausgebildet, die sich vorteilhaft im Falle eines Crashereignisses, insbesondere eines Heckcrashs mit einem Anstoß auf den Hinterachshilfsrahmen 6 auswirkt. Die Erfindung beschränkt sich jedoch nicht auf besagte Querschnittsverengung 36 zur Ausbildung der Sollknickstelle 38 im jeweiligen Seitenteil 7, 8, sondern erfasst auch zumindest eine nicht zeichnerisch dargestellte lokale Wanddickenreduzierung der Seitenteile 7, 8 im besagten jeweiligen Bereich derselben. Eine Kombination beider Maßnahmen ist durch die Erfindung selbstverständlich mit erfasst (nicht zeichnerisch dargestellt). Hierdurch ist das Knickverhalten der Seitenteile 7, 8 besonders gut einstellbar.

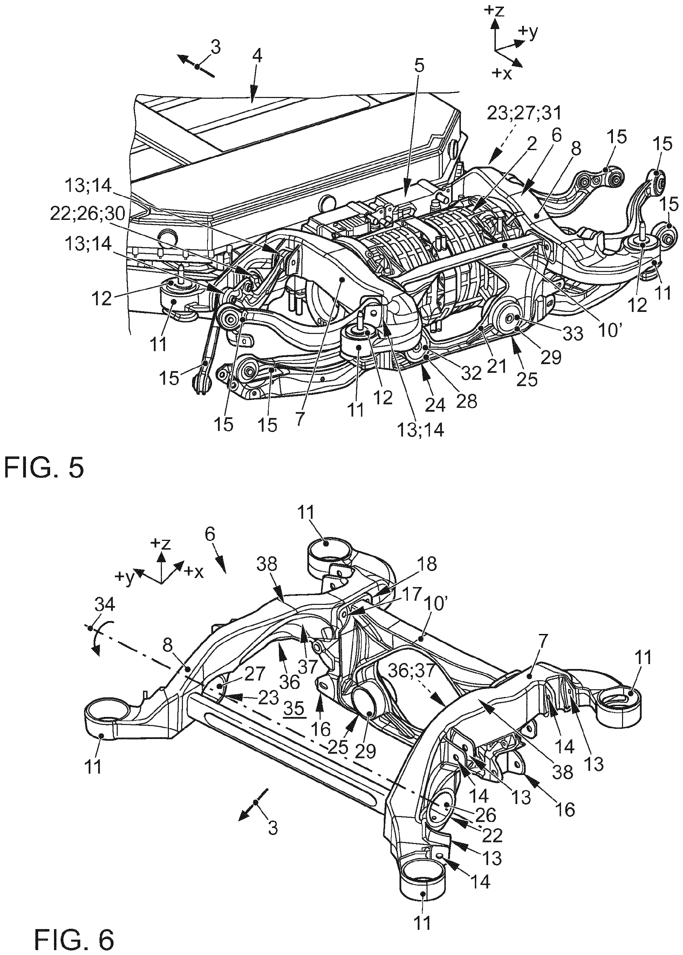

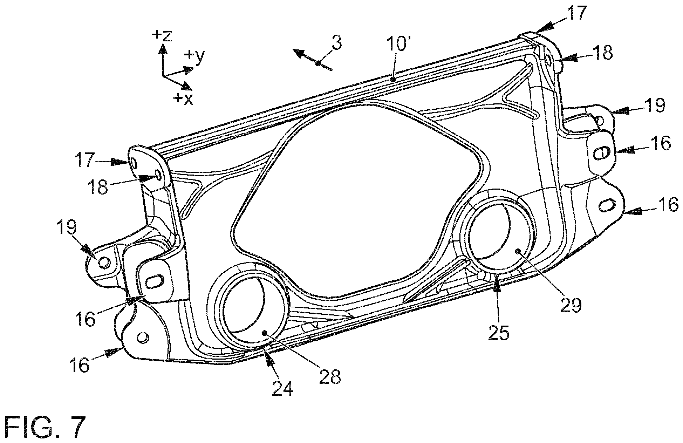

Das Ausführungsbeispiel gemäß den Fig. 5 bis 7 unterscheidet sich zum vorbeschriebenen lediglich in der Ausbildung des zweiten, hinteren Querträgers 10'. Dieser zweite, hintere Querträger 10' weist ebenfalls neben Lenkeranschraubstellen 16 beidenends je drei Anschraubstellen 17 bis 19 zur Befestigung desselben an den Seitenteilen 7, 8 auf. Zumindest eine der Anschraubstellen 17 bis 19, vorliegend die Anschraubstelle 18, ist derart ausgebildet, dass die nicht zeichnerisch dargestellte Befestigungsschraube in Fahrzeuglängsrichtung (X-Richtung) verläuft. Bei diesem zweiten, hinteren Querträger 10' handelt es sich jedoch um einen Querträger 10', der für eine ungelenkte Hinterachse ausgeführt ist. Insoweit weist derselbe keinerlei Anbindungs- respektive Anschraubstellen 20 für eine Lenkeinrichtung 21 auf.

Nachfolgend wird die Erfindung weiter in ihrer Funktion beschrieben.

Gesetzt den Fall, es ist ein Heckcrash zu verzeichnen, so wird die in insbesondere in Fahrtrichtung 3 wirkende Anstoßkraft zunächst vom Hinterachshilfsrahmen 6 aufgenommen, dessen Seitenteile 7, 8 im Bereich der jeweiligen Querschnittsverengung 36 und/oder der jeweiligen lokalen Wanddickenreduzierung bzw. im Bereich der jeweiligen Sollknickstelle 38 versagen und tendenziell nach Fahrzeug-oben und somit von der im Freigang 37 des jeweiligen Seitenteils 7, 8 angeordneten Antriebseinheit 2 weg ausknicken sowie durch ihre Verformung Anstoßenergie absorbieren. Die infolge des Crashereignisses unmittelbar auf die Antriebseinheit 2 wirkenden Kräfte werden somit vorteilhaft minimiert. Ungeachtet dessen erfährt die in den ersten, vorderen Lagerstellen 22, 23 gelagerte und abgestützte Antriebseinheit 2 bei besonders hohen und vom zweiten, hinteren Querträger 10 übertragenen Anstoßkräften ein Moment um die als Schwenkachse fungierende Achse 34 und wird somit um besagte Achse 34 tendenziell nach Fahrzeug-oben geschwenkt und so definiert geführt.

Ein Versatz der Antriebseinheit 2 in Fahrtrichtung 3 des Kraftfahrzeugs 1 hin zu den der Antriebseinheit 2 nachgeordneten Vorrichtungen und/oder Aggregaten, vorliegend hin zur Traktionsbatterie 4 und Leistungselektronik 5 mit etwaiger Beschädigung derselben ist wirkungsvoll vermieden.

**Bezugszeichenliste**

| | | | |
|---|---|---|---|
| 1 | Kraftfahrzeug | 20 | Anschraubstellen (Lenkeinrichtung 21) |
| 2 | Antriebseinheit | 21 | Lenkeinrichtung |
| 3 | Fahrtrichtung | 22 | Lagerstelle |
| 4 | Traktionsbatterie | 23 | Lagerstelle |
| 5 | Leistungselektronik | 24 | Lagerstelle |
| 6 | Hinterachshilfsrahmen | 25 | Lagerstelle |
| 7 | Seitenteil | 26 | Anbindungsbutzen |
| 8 | Seitenteil | 27 | Anbindungsbutzen |
| 9 | Querträger | 28 | Anbindungsbutzen |
| 10 | Querträger | 29 | Anbindungsbutzen |
| 10' | Querträger | 30 | Elastomerlager |
| 11 | Anbindungsbutzen | 31 | Elastomerlager |
| 12 | Elastomerlager | 32 | Elastomerlager |
| 13 | Anschraubstellen (Seitenteil 6, 7) | 33 | Elastomerlager |
| 14 | Bohrung | 34 | Achse |
| 15 | Achslenker | 35 | Freiraum (Hinterachshilfsrahmen 6) |
| 16 | Lenkeranschraubstellen (zweiter Querträger 10, 10') | 36 | Querschnittsverengung (Seitenteil 7, 8) |
| 17 | Anschraubstelle | 37 | Freigang (Seitenteil 7, 8) |
| 18 | Anschraubstelle | 38 | Sollknickstelle (Seitenteil 7, 8) |
| 19 | Anschraubstelle | | |

## Patentansprüche

1. Hinterachshilfsrahmen (6) für ein Kraftfahrzeug (1), mit zwei in Fahrzeuglängsrichtung (X-Richtung) verlaufenden Seitenteilen (7, 8) sowie mit einem ersten, vorderen und einem zweiten, hinteren, die Seitenteile (7, 8) untereinander verbindenden Querträger (9; 10, 10'), wobei der Hinterachshilfsrahmen (6) einen Freiraum (35) umschließt, in welchem eine am Hinterachshilfsrahmen (6) gelagerte und befestigte Antriebseinheit (2) angeordnet oder anordbar ist, und wobei die Seitenteile (7, 8), jeweils einen Freigang (37) für die besagte Antriebseinheit (2) sowie eine Sollknickstelle (38) ausbildend, bereichsweise eine Querschnittsverengung (36) und/oder eine lokale Wanddickenreduzierung aufweisen,
**dadurch gekennzeichnet, dass** in Fahrtrichtung (3) des Kraftfahrzeugs (1) gesehen die Querschnittsverengung (36) und/oder Wanddickenreduzierung zwischen zumindest einer ersten, vorderen und zumindest einer zweiten, hinteren Lagerstelle (22, 23; 24, 25) der Antriebseinheit (2) am Hinterachshilfsrahmen (6) angeordnet ist/sind, und
dass zwei erste, vordere Lagerstellen (22, 23) vorgesehen sind, wobei je eine an einem Seitenteil (7, 8) angeordnet ist, und dass zwei zweite, hintere Lagerstellen (24, 25) vorgesehen sind, die am zweiten, hinteren Querträger (10, 10') angeordnet sind.

2. Hinterachshilfsrahmen (6) nach Anspruch 1 , **dadurch gekennzeichnet, dass** die Querschnittsverengung (36) und/oder die Wanddickenreduzierung in einem unteren Bereich des jeweiligen Seitenteils (7, 8) ausgebildet ist/sind.

3. Hinterachshilfsrahmen (6) nach Anspruch 1 oder 2, **dadurch gekennzeichnet, dass** die erste/n, vordere/n Lagerstelle/n (22, 23) in einer in Fahrzeugquerrichtung (Y-Richtung) verlaufenden Achse (34) angeordnet und derart ausgebildet ist/sind, dass im Falle eines Heckcrashereignisses die Antriebseinheit (2) um die besagte Achse (34) schwenkbar ist.

4. Hinterachshilfsrahmen (6) nach einem der vorstehenden Ansprüche, **dadurch gekennzeichnet, dass** zumindest der zweite, hintere Querträger (10, 10') lösbar mit den Seitenteilen (7, 8) verbunden ist.

5. Hinterachshilfsrahmen (6) nach Anspruch 4, **dadurch gekennzeichnet, dass** der zweite, hintere Querträger (10, 10') durch Verschraubung mit jedem Seitenteil (7, 8) verbunden ist, wobei je Seitenteil (7, 8) zumindest eine Schraubverbindung durch eine Befestigungsschraube bewirkt ist, die in Fahrzeuglängsrichtung (X-Richtung) verläuft.

6. Hinterachshilfsrahmen (6) nach einem der Ansprüche 1 bis 4, **dadurch gekennzeichnet, dass** die Seitenteile (7, 8) und der erste, vordere Querträger (9) aus einem Metallguss bestehen, und dass der zweite, hintere Querträger (10, 10') aus einem Metallguss oder aus einem faserverstärkten Kunststoff besteht.

7. Hinterachshilfsrahmen (6) nach einem der vorstehenden Ansprüche, **dadurch gekennzeichnet, dass** die Seitenteile (7, 8) Anschraubstellen (13) mit Bohrungen (14) zur Befestigung von Achslenkern (15) aufweisen, welche Bohrungen (14) durch Stanzen erzeugt sind.

8. Hinterachshilfsrahmen (6) nach einem der vorstehenden Ansprüche, **dadurch gekennzeichnet, dass** die Antriebseinheit (2) durch eine elektrische Maschine gebildet ist.

9. Kraftfahrzeug (1), mit einem Hinterachshilfsrahmen (6) nach einem der Ansprüche 1 bis 8.

## Claims

1. Rear axle subframe (6) for a motor vehicle (1), with two side parts (7, 8) running in the longitudinal direction of the vehicle (X direction) and with a first, front and a second, rear cross member (9; 10, 10') connecting the side parts (7, 8) to each other, wherein the rear axle subframe (6) surrounds a free space (35) in which a drive unit (2) which is mounted on and fastened to the rear axle subframe (6) is arranged or can be arranged, and wherein the side parts (7, 8), each forming a clearance (37) for said drive unit (2) and a predetermined buckling point (38), have a cross-sectional constriction (36) and/or a local reduction in wall thickness in regions, **characterized in that** the cross-sectional constriction (36) and/or reduction in wall thickness are/is arranged on the rear axle subframe (6) between at least one first, front and at least one second, rear bearing point (22, 23; 24, 25) of the drive unit (2), as seen in the direction of travel (3) of the motor vehicle (1), and **in that** two first, front bearing points (22, 23) are provided, wherein each one is arranged on a side part (7, 8), and **in that** two second, rear bearing points (24, 25) are provided which are arranged on the second, rear cross member (10, 10').

2. Rear axle subframe (6) according to Claim 1, **characterized in that** the cross-sectional constriction (36) and/or the reduction in wall thickness are/is formed in a lower region of the respective side part (7, 8).

3. Rear axle subframe (6) according to Claim 1 or 2, **characterized in that** the first, front bearing point(s) (22, 23) are/is arranged on an axle (34) running in the transverse direction of the vehicle (Y direction) and are/is designed in such a manner that, in the case of a rear crash event, the drive unit (2) is pivotable about said axis (34).

4. Rear axle subframe (6) according to one of the preceding claims, **characterized in that** at least the second, rear cross member (10, 10') is connected releasably to the side parts (7, 8).

5. Rear axle subframe (6) according to Claim 4, **characterized in that** the second, rear cross member (10, 10') is connected to each side part (7, 8) by screwing, wherein at least one screw connection is brought about per side part (7, 8) by means of a fastening screw which runs in the longitudinal direction of the vehicle (X direction).

6. Rear axle subframe (6) according to one of Claims 1 to 4, **characterized in that** the side parts (7, 8) and the first, front cross member (9) are composed of a metal casting, and **in that** the second, rear cross member (10, 10') is composed of a metal casting or of a fibre-reinforced plastic.

7. Rear axle subframe (6) according to one of the preceding claims, **characterized in that** the side parts (7, 8) have screw-on points (13) with bores (14) for the securing of axle links (15), which bores (14) are produced by punching.

8. Rear axle subframe (6) according to one of the preceding claims, **characterized in that** the drive unit (2) is formed by an electric engine.

9. Motor vehicle (1), with a rear axle subframe (6) according to one of Claims 1 to 8.

## Revendications

1. Faux-châssis d'essieu arrière (6) destiné à un véhicule automobile (1), ledit faux-châssis comprenant deux parties latérales (7, 8) qui s'étendent dans la direction longitudinale (direction X) du véhicule et des première traverse avant et deuxième traverse arrière (9 ; 10, 10') qui relient les parties latérales (7, 8) entre elles, le faux-châssis d'essieu arrière (6) renfermant un espace libre (35) dans lequel est ou peut être disposée une unité d'entraînement (2) montée et fixée sur le faux-châssis d'essieu arrière (6), et les parties latérales (7, 8) comportant, en formant chacune un passage libre (37) destiné à ladite unité d'entraînement (2) et un point de pliage de consigne (38), par endroits un rétrécissement de section (36) et/ou une réduction d'épaisseur de paroi locale, **caractérisé en ce que,** vu dans le sens de roulement (3) du véhicule automobile (1), le rétrécissement de section (36) et/ou la réduction d'épaisseur de paroi entre au moins un premier point d'appui avant et au moins un deuxième point d'appui arrière (22, 23 ; 24, 25) de l'unité d'entraînement (2) sont disposés sur le faux-châssis d'essieu arrière (6) et **en ce que** deux premiers points d'appui avant (22, 23) sont prévus, chacun d'eux étant disposé sur une partie latérale (7, 8), et **en ce que** deux deuxièmes points d'appui arrière (24, 25) sont prévus qui sont disposés sur la deuxième traverse arrière (10, 10').

2. Faux-châssis d'essieu arrière (6) selon la revendication 1, **caractérisé en ce que** le rétrécissement de section (36) et/ou la réduction d'épaisseur de paroi sont formés dans une région inférieure de la partie latérale respective (7, 8).

3. Faux-châssis d'essieu arrière (6) selon la revendication 1 ou 2, **caractérisé en ce que** le ou les premiers points d'appui avant (22, 23) sont disposés sur un axe (34) qui s'étend dans la direction transversale du véhicule (direction Y) et sont formés de manière à ce que, en cas de collision arrière, l'unité d'entraînement (2) puisse pivoter autour dudit axe (34).

4. Faux-châssis d'essieu arrière (6) selon l'une des revendications précédentes, **caractérisé en ce qu'**au moins la deuxième traverse arrière (10, 10') est reliée de manière amovible aux parties latérales (7, 8).

5. Faux-châssis d'essieu arrière (6) selon la revendication 4, **caractérisé en ce que** la deuxième traverse arrière (10, 10') est reliée par vissage à chaque partie latérale (7, 8), au moins une liaison par vis étant effectuée, pour chaque partie latérale (7, 8), par une vis de fixation qui s'étend dans la direction longitudinale du véhicule (direction X).

6. Faux-châssis d'essieu arrière (6) selon l'une des revendications 1 à 4, **caractérisé en ce que** les parties latérales (7, 8) et la première traverse avant (9) sont formées à partir d'une coulée de métal, et **en ce que** la deuxième traverse arrière (10, 10') est formée à partir d'une coulée de métal ou d'une matière plastique renforcée par des fibres.

7. Faux-châssis d'essieu arrière (6) selon l'une des revendications précédentes, **caractérisé en ce que** les parties latérales (7, 8) comportent des emplacements de vissage (13) pourvus d'alésages (14) pour fixer des biellettes d'essieu (15), lesquels alésages (14) sont réalisés par poinçonnage.

8. Faux-châssis d'essieu arrière (6) selon l'une des revendications précédentes, **caractérisé en ce que** l'unité d'entraînement (2) est formée par une machine électrique.

9. Véhicule automobile (1) comprenant un faux-châssis d'essieu arrière (6) selon l'une des revendications 1 à 8 .
